(19)

**Europäisches Patentamt**
**European Patent Office**
**Office européen des brevets**

(11)  **EP 3 758 194 B1**

(12)  **EUROPÄISCHE PATENTSCHRIFT**

(45) Veröffentlichungstag und Bekanntmachung des Hinweises auf die Patenterteilung:
**17.09.2025   Patentblatt 2025/38**

(21) Anmeldenummer: **20180288.1**

(22) Anmeldetag: **16.06.2020**

(51) Internationale Patentklassifikation (IPC):
**H02K 1/276** (2022.01)      **H02K 29/03** (2006.01)

(52) Gemeinsame Patentklassifikation (CPC):
**H02K 1/2766; H02K 29/03;** H02K 2201/03;
H02K 2213/03

(54) **ROTOR FÜR EINE ELEKTRISCHE MASCHINE, ELEKTRISCHE MASCHINE FÜR EIN FAHRZEUG UND FAHRZEUG**

MOTOR VEHICLE; ELECTRIC MACHINE FOR A MOTOR VEHICLE AND ROTOR FOR AN ELECTRIC MACHINE

ROTOR POUR UNE MACHINE ÉLECTRIQUE, MACHINE ÉLECTRIQUE POUR UN VÉHICULE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **27.06.2019   DE 102019117364**

(43) Veröffentlichungstag der Anmeldung:
**30.12.2020   Patentblatt 2020/53**

(73) Patentinhaber: **Valeo eAutomotive Germany GmbH**
**91056 Erlangen (DE)**

(72) Erfinder: **DOTZ, Boris**
**81241 München (DE)**

(56) Entgegenhaltungen:
**EP-A1- 1 610 444        CN-A- 108 711 977
JP-A- 2000 316 241       JP-A- 2002 209 350
JP-A- 2015 053 757       US-A1- 2002 047 434
US-A1- 2002 175 583      US-A1- 2007 145 850**

**Beschreibung**

Die vorliegende Erfindung betrifft einen Rotor für eine elektrische Maschine, umfassend ein in mehrere Sektoren untergliedertes Rotorblechpaket, in denen jeweils eine Permanentmagnetanordnung angeordnet ist, die zwei V-förmig und symmetrisch bezüglich einer den Sektor in zwei Halbsektoren teilenden Symmetrieebene positionierte Permanentmagnete umfasst.

Daneben betrifft die Erfindung eine elektrische Maschine für ein Fahrzeug und ein Fahrzeug.

Ein solcher Rotor ist beispielsweise aus dem Dokument DE 10 2012 219 175 A1 bekannt, welches eine drehende elektrische Maschine betrifft. Diese umfasst einen Rotor mit eingebettetem Permanentmagnet (IPM), in dem mehrere Mengen von Permanentmagneten derart eingebettet sind, dass Magnete von jeder Menge ein Paar von Permanentmagneten umfassen, die sich in einer V-förmigen Anordnung befinden, die sich in Richtung einer äußeren kreisförmigen Umfangsfläche öffnen.

Ein solcher Rotor zeichnet sich durch ein hohes Verhältnis der Schenkligkeit (saliency ratio) aus, wodurch ein hohes Reluktanzmoment erzeugt wird. Die V-förmige Anordnung der Permanentmagneten führt jedoch zu einem verzerrten magnetischen Luftspaltfeld, das von einer gewünschten sinusförmigen Form abweicht.

Weitere Rotoren mit Permanentmagneten sind aus US 2007/145850 A1 und JP 2015053757 A bekannt. Der Erfindung liegt mithin die Aufgabe zugrunde, eine Möglichkeit zur Verbesserung der Verteilung des magnetischen Luftspaltfeld einer elektrischen Maschine anzugeben, wobei gleichzeitig ein hohes Reluktanzmoment erzeugbar ist.

Zur Lösung dieser Aufgabe ist erfindungsgemäß bei einem Rotor der eingangs genannten Art vorgesehen, dass ein Außenradius des Rotorblechpakets in einem jeweiligen Sektor ein Paar lokaler Minimalwerte aufweist, die symmetrisch bezüglich der Symmetrieebene zueinander in einem jeweiligen Halbsektor des Sektors ausgebildet sind. Der erfindungsgemäße Rotor ist durch den beigefügten unabhängigen Anspruch 1 definiert.

Die Erfindung beruht auf der Überlegung, die äußere Form des Rotorblechpakets durch das Ausbilden der lokalen Minimalwerte des Außenradius so anzupassen, dass sich eine Verteilung eines magnetischen Luftspaltfelds einem gewünschten sinusförmigen Verlauf annähert. Dabei wurde erkannt, dass bei einem herkömmlichen Rotor mit konstantem Außenradius durch die V-förmige Anordnung der Permanentmagnete ein im Wesentlichen treppenförmiges Luftspaltfeld erzeugt wird, wobei im Bereich von Streuflüssen zusätzlich ein trapezförmiger Verlauf zustande kommt. Durch gezielte Veränderung des Außenradius kann diesem Verlauf des Luftspaltfelds entgegengewirkt werden, sodass das Luftspaltfeld bei dem erfindungsgemäßen Rotor vorteilhafterweise dem gewünschten sinusförmigen Verlauf angenähert wird und gleichzeitig ein hohes Reluktanzmoment erzeugbar ist.

Die Permanentmagnete erstrecken sich typischerweise in axialer Richtung entlang des Rotors. Typischerweise hat ein jeweiliger Permanentmagnet die Form eines Quaders. Eine Querschnittsfläche, deren Flächennormale in axialer Richtung verläuft, eines jeweiligen Permanentmagneten weist typischerweise eine Langseite und eine Kurzseite auf, wobei die Langseiten zum Außenradius des Rotorblechpakets hin geöffnet sind. Zweckmäßigerweise weist das Rotorblechpaket für jeden Permanentmagneten eine das Rotorblechpaket in axialer Richtung durchsetzende Magnettasche auf, innerhalb welcher einer der Permanentmagnete angeordnet ist. Durch die Magnetaschen können auch, insbesondere an die Kurzseiten der Permanentmagnete angrenzende, Freiräume im Rotor ausgebildet sein. Typischerweise bildet jeder Sektor einen Pol des Rotors aus. Die Symmetrieebene erstreckt sich typischerweise in radialer und axialer Richtung. Die Symmetrie der Halbsektoren ist im Übrigen nicht dahingehend zu verstehen, dass das Rotorblechpaket selbst in den Halbsektoren symmetrisch ausgebildet sein muss. So ist es beispielsweise denkbar, dass eine den Rotor durchsetzende Öffnung keine Symmetrie der Halbsektoren aufweist, um eine Welle innerhalb der Öffnung zu befestigen.

Es wird bei dem erfindungsgemäßen Rotor besonders bevorzugt, wenn sich ein Maximalwert des Außenradius über einen jeweiligen Sektor auf der Symmetrieebene befindet. In diesem Bereich soll ein Maximum des näherungsweise sinusförmigen Luftspaltfelds liegen, sodass der Rotor hier den Maximalwert seines Außenradius aufweisen kann. An der Grenze von zwei benachbarten Sektoren ist bei dem erfindungsgemäßen Rotor typischerweise ein lokaler Maximalwert des Außenradius ausgebildet.

Es wurde experimentell ermittelt, dass sich ein jeweiliger lokaler Minimalwert des Paars vorteilhafterweise innerhalb eines Teilsektors des Halbsektors befindet, der in Umfangsrichtung durch die Position eines radial äußersten Punkts der Permanentmagnetanordnung und durch eine Position eines in Umfangsrichtung äußersten Punkts der Permanentmagnetanordnung begrenzt ist.

Erfindungsgemäß ist vorgesehen, dass in einem jeweiligen Sektor eine zweite Permanentmagnetanordnung angeordnet ist, wobei ein radial innerster Punkt der zweiten Permanentmagnetanordnung radial weiter außen liegt als ein radial innerster Punkt der ersten Permanentmagnetanordnung, wobei der Außenradius des Rotorblechpakets ein zweites Paar lokaler Minimalwerte aufweist, die symmetrisch bezüglich der Symmetrieebene zueinander in einem jeweiligen Halbsektor des Sektors ausgebildet sind und sich in Umfangsrichtung näher an der Symmetrieebene befinden als das erste Paar lokaler Minimalwerte. So kann das optimierte Luftspaltfeld auch bei komplexeren Permanentmagnetstrukturen innerhalb eines Sektors realisiert werden.

Dabei wird es bevorzugt, wenn sich in einem jeweiligen Halbsektor zwischen dem Minimalwert des ersten Paares und dem Minimalwert des zweiten Paares ein, insbesondere genau ein, lokaler Maximalwert befindet.

Gemäß einer besonders bevorzugten Ausgestaltungsalternative ist vorgesehen, dass die zweite Permanentmagnetanordnung zwei weitere V-förmig und symmetrisch bezüglich der Symmetrieebene des Sektors angeordnete Permanentmagnete umfasst. Ein jeweiliger Permanentmagnet der zweiten Permanentmagnetanordnung weist typischerweise eine geringere Querschnittsfläche als ein jeweiliger Permanentmagnet der ersten Permanentmagnetanordnung auf.

Gemäß einer weiteren bevorzugten Ausgestaltungsalternative ist vorgesehen, dass die zweite Permanentmagnetanordnung einen orthogonal zur Symmetrieebene angeordneten Permanentmagneten umfasst. Der Permanentmagnet befindet sich folglich in beiden Halbsektoren.

Es wurde ferner im Rahmen der Erfindung erkannt, dass sich der Verlauf des Außenradius des Rotors auch analytisch beschreiben lässt. So wird es bevorzugt, dass der Verlauf des Außenradius in einem bezüglich eines Minimalwerts symmetrieebenennahen Bereich der Funktion

$$r = R_{max} + \delta_0 - \delta(x)$$

mit

$$\delta(x) = \frac{\alpha}{\cos\left(\frac{\pi}{\tau_p}x\right)}$$

folgt. Alternativ oder zusätzlich kann der Verlauf des Außenradius in einem bezüglich eines Minimalwerts symmetrieebenenfernen Bereich der Funktion

$$r = R_{max} + \delta_0 - \delta(x)$$

mit

$$\delta(\mathrm{x}) = \beta\frac{1 - \frac{2}{\tau_p}x}{\cos\left(\frac{\pi}{\tau_p}x\right)}$$

folgen. Dabei beschreiben

- r den Wert des Außenradius,
- $R_{max}$ den Maximalwert des Außenradius,
- $\delta_0$ eine Konstante bzw. ein Minimum des Luftspalts zwischen dem Rotor und einem Stator der elektrischen Maschine,
- $\alpha, \beta$ jeweils einen positiven Proportionalitätsfaktor,
- $\tau_p$ einen Abstand in Umfangsrichtung zwischen den Symmetrieebenen benachbarter Sektoren und
- x eine Koordinate in Umfangsrichtung mit $x = 0$ an der Position der Symmetrieebene und $x = \frac{\tau_p}{2}$ an einer Mittelposition zwischen den Symmetrieebenen benachbarter Sektoren.

Grundsätzlich kann bei dem erfindungsgemäßen Rotor vorgesehen sein, dass sich das oder ein jeweiliges Paar lokaler Minimalwerte an einer Position in Umfangsrichtung befindet, an der ein magnetischer Streuflussstark zunimmt.

Die der Erfindung zugrunde liegende Aufgabe wird ferner gelöst durch eine elektrische Maschine für ein Fahrzeug, umfassend einen Stator und einen innerhalb des Stators drehbar gelagerten erfindungsgemäßen Rotor.

Die der Erfindung zugrunde liegende Aufgabe wird schließlich auch gelöst durch ein Fahrzeug, umfassend eine erfindungsgemäße elektrische Maschine, welche dazu eingerichtet ist, das Fahrzeug anzutreiben.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:

Fig. 1 eine geschnittene Prinzipdarstellung eines ersten Ausführungsbeispiels des erfindungsgemäßen Rotors;

Fig. 2 eine Detailansicht eines Sektors des in Fig. 1 gezeigten Rotors;

Fig. 3 eine Prinzipdarstellung eines Halbsektors des in Fig. 1 gezeigten Rotors;

Fig. 4 ein Diagramm eines Außenradius des Rotors über eine Koordinate in Umfangsrichtung;

Fig. 5 ein Diagramm der magnetischen Flussdichte über die Koordinate in Umfangsrichtung des Rotors;

Fig. 6 ein Fig. 5 entsprechendes Diagramm eines herkömmlichen Rotors;

Fig. 7 eine geschnittene Prinzipdarstellung eines weiteren Ausführungsbeispiels des erfindungsgemäßen Rotors; und

Fig. 8 eine Prinzipskizze eines Ausführungsbeispiels des erfindungsgemäßen Fahrzeugs mit einem Ausführungsbeispiel der erfindungsgemäßen elektrischen Maschine.

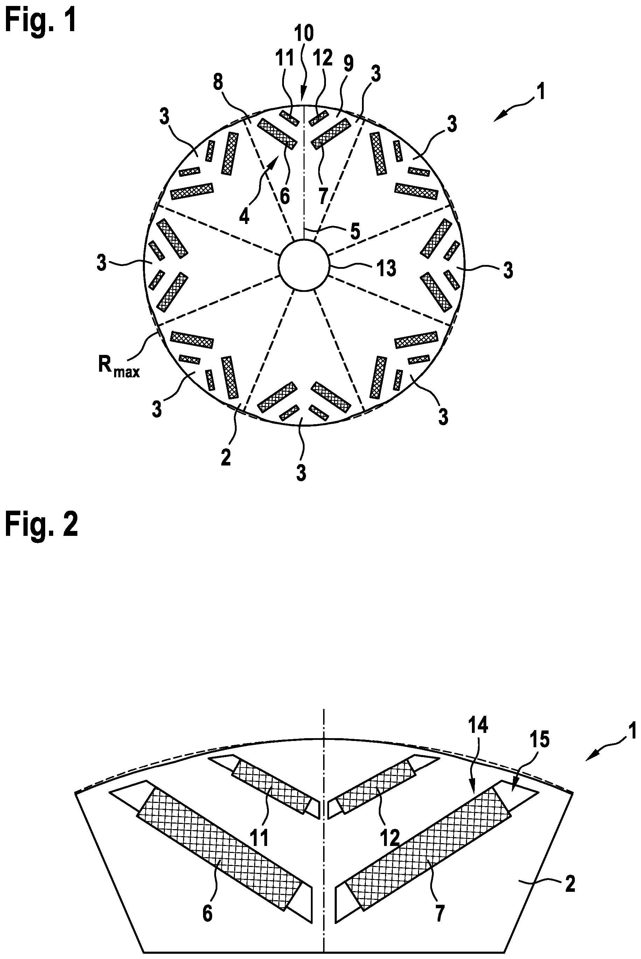

Fig. 1 ist eine geschnittene Prinzipdarstellung eines ersten Ausführungsbeispiels eines Rotors 1.

Der Rotor 1 umfasst ein Rotorblechpaket 2, das in insgesamt acht Sektoren 3, untergliedert ist. Dabei ist jeder Punkt des Rotors 1 in der gezeigten querschnittlichen Darstellung genau einem Sektor 3 zugeordnet. Es grenzen mithin zwei benachbarte Sektoren 3 unmittelbar aneinander. In jedem Sektor 3 ist eine erste Permanentmagnetanordnung 4 mit zwei V-förmig und symmetrisch bezüglich einer Symmetrieebene 5 positionieren Permanentmagneten 6, 7 angeordnet. Die Symmetrieebene 5 erstreckt sich in axialer und radialer Richtung des Rotors 1 und teilt den Sektor 3 in zwei Halbsektoren 8, 9. Dabei liegt der Permanentmagnet 6 im Halbsektor 8 und der Permanentmagnet 7 im Halbsektor 9. Jeder Sektor 3 bildet einen Pol des Rotors 1, wobei die Anzahl der Sektoren 3 bzw. der Pole rein exemplarisch ist.

Des Weiteren umfasst der Rotor 1 eine zweite Permanentmagnetanordnung 10, die zwei weitere V-förmig und symmetrisch bezüglich der Symmetrieebene 5 des Sektors 3 angeordnete Permanentmagnete 11, 12 umfasst, wobei der Permanentmagnet 11 im Halbsektor 8 und der Permanentmagnet 12 im Halbsektor 9 angeordnet sind. Ein radial innerster Punkt der zweiten Permanentmagnetanordnung bzw. eines jeweiligen Permanentmagneten 11, 9 liegt radial weiter außen als ein radial innerster Punkt der ersten Permanentmagnetanordnung 4 bzw. der Permanentmagnete 6, 7.

Daneben weist der Rotor 1 eine sich im Mittelpunkt in Axialrichtung erstreckende Durchgangsöffnung 13 für eine Welle (nicht gezeigt) auf.

Fig. 2 ist eine Detailansicht eines Sektors 3 des Rotors 1, die repräsentativ für alle weiteren Sektoren 3 ist. Ersichtlich sind jeweilige Permanentmagnete 6, 7, 11, 12 jeweils in einer Magnettasche 14 angeordnet, sodass jeweilige Langseiten der Permanentmagnete 6, 7, 11, 12 das Rotorblechpaket 2 berühren. Die sich als Durchgangsöffnungen in axialer Richtung erstreckenden Magnetaschen sind jeweils größer als eine Querschnittsfläche des aufgenommen Permanentmagneten 6, 7, 11, 12, sodass an deren jeweiligen Kurzseiten Freiräume 15 im Rotor 1 ausgebildet sind.

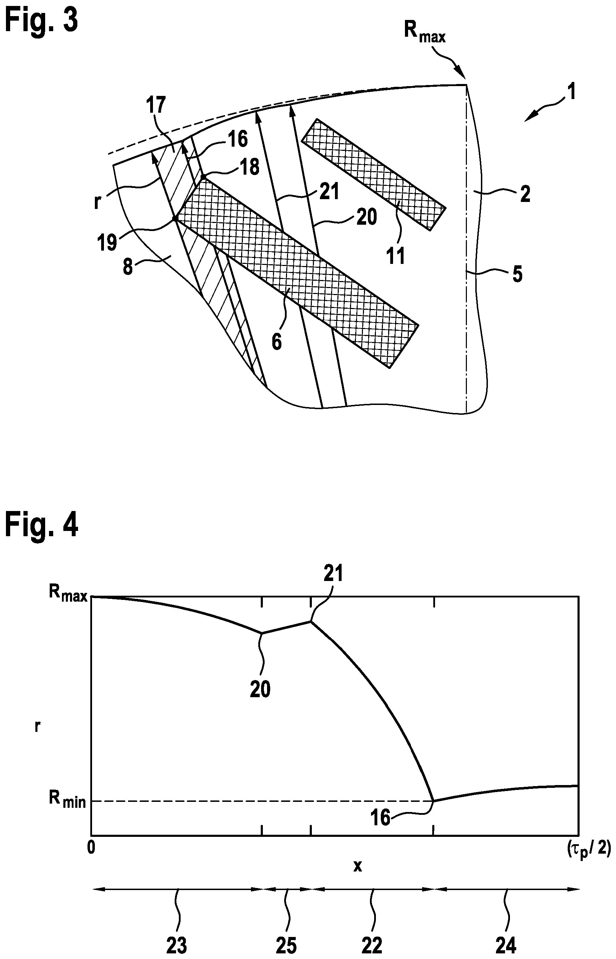

Fig. 3 ist eine Prinzipdarstellung des Halbsektors 8 des Sektors 3. Die Prinzipdarstellung ist spiegelbildlich betrachtet auch repräsentativ für den Halbsektor 9 des Sektors 3 und die entsprechenden Halbsektoren 8, 9 der übrigen Sektoren 3.

Ein Außenradius r des Rotorblechpakets 2 weist im Halbsektor 8 einen ersten lokalen Minimalwert 16 auf. Folglich ist wegen der Symmetrie der Halbsektoren 8, 9 ein erstes Paar lokaler Minimalwerte in einem jeweiligen Sektor 3 ausgebildet. Der erste lokale Minimalwert 16 befindet sich innerhalb eines - in Fig. 3 schraffiert dargestellten - Teilsektors 17 des Halbsektors 8, der in Umfangsrichtung durch die Position eines radial äußersten Punkts 18 der ersten Permanentmagnetanordnung 4 bzw. des Permanentmagneten 6 und durch eine Position eines in Umfangsrichtung äußersten Punkts 19 des Permanentmagneten begrenzt ist.

Der Außenradius r weist im Halbsektor 8 ferner einen zweiten lokalen Minimalwert 20 auf, der sich in Umfangsrichtung näher an der Symmetrieebene 5 befindet als der erste lokale Minimalwert 16. Zwischen den Minimalwerten 16, 20 befindet sich ein lokaler Maximalwert 21 des Außenradius r. Der Vollständigkeit halber sei erwähnt, dass wegen der Symmetrie der Halbsektoren so ein zweites Paar lokaler Minimalwerte und ein Paar lokaler Maximalwerte ausgebildet ist.

Darüber hinaus weist der Außenradius r über den gesamten Sektor 3 einen globalen Maximalwert $R_{max}$ auf, welcher in den Fig. über den vollen Umfang des Rotors 1 gestrichelt dargestellt ist. Einen weiteren lokalen Maximalwert bildet die Grenze zweier benachbarter Sektoren 3.

Fig. 4 ist ein Diagramm des Außenradius r des Rotors 1 über eine Koordinate x in Umfangsrichtung. Die Koordinate x beschreibt dabei den Abstand von der Symmetrieebene, wobei an der Position der Symmetrieebene x = 0 gilt und an der Grenze zweier benachbarter Sektoren 3 der Wert der Koordinate x = $\tau_p$/2 beträgt. Dabei beschreibt $\tau_p$ die Polweite des Rotors 1.

In einem bezüglich des ersten lokalen Minimalwerts 16 symmetrieebenennahen Bereich 22, der sich von der Position des lokalen Maximalwerts 21 bis zur Position des ersten lokalen Minimalwerts 16 erstreckt, sowie in einem bezüglich des zweiten lokalen Minimalwerts 20 symmetrieebenennahen Bereich 23, der sich von der Position des Symmetrieebene 5 bis zur Position des zweiten lokalen Minimalwerts 20 erstreckt, folgt der Verlauf des Außenradius r der Funktion

$$r = R_{max} + \delta_0 - \delta(x)$$

mit

$$\delta(x) = \frac{\alpha}{\cos\left(\frac{\pi}{\tau_p}x\right)}$$

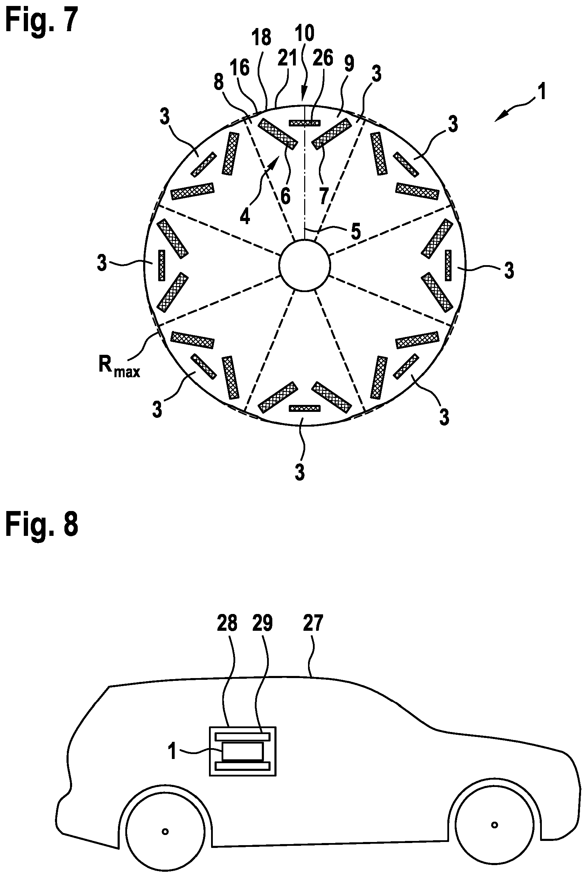

wobei $\alpha$ einen Proportionalitätsfaktor für einen jeweiligen Bereich 22, 23 und $\delta_0$ einen Minimalwert eines Luftspalts zwischen dem Rotor 1 und einem Stator 29 (siehe Fig. 8) beschreiben. Mit anderen Worten beschreibt $\delta_0$ den minimalen Luftspalt zu einer Statorinnenbohrung.

In einem bezüglich des ersten lokalen Minimalwerts 16 symmetrieebenenfernen Bereich 24, der sich von der Position des lokalen Minimalwerts 16 bis zur Grenze zum benachbarten Sektor 3 erstreckt, sowie in einem bezüglich des zweiten lokalen Minimalwerts 20 symmetrieebenenfernen Bereich 25, der sich von der Position des zweiten lokalen Minimalwerts 20 bis zum lokalen Maximalwert 21 erstreckt, folgt der Verlauf des Außenradius r der Funktion

$$r = R_{max} + \delta_0 - \delta(x)$$

mit

$$\delta(\text{x}) = \beta \frac{1 - \dfrac{2}{\tau_p} x}{\cos\left(\dfrac{\pi}{\tau_p} x\right)}$$

wobei β einen Proportionalitätsfaktor für einen jeweiligen Bereich 24, 25 beschreibt.

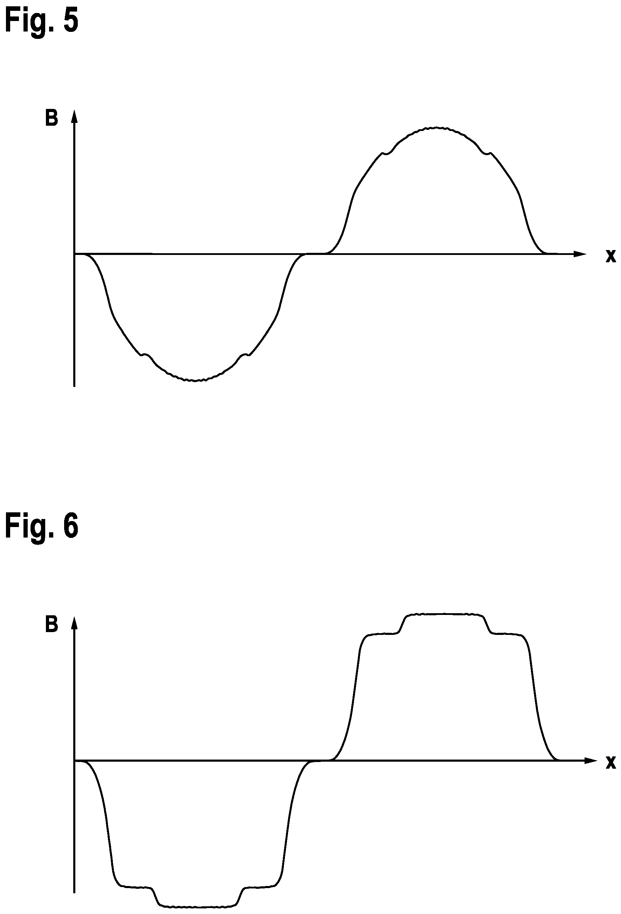

Fig. 5 und Fig. 6 sind jeweils ein Diagramm der magnetischen Flussdichte B über die Koordinate x. Dabei bezieht sich Fig. 5 auf das magnetische Luftspaltfeld einer elektrischen Maschine mit dem Ausführungsbeispiel des Rotors 1 und Fig. 6 auf das magnetische Luftspaltfeld einer elektrischen Maschine mit einem dem Rotor 1 entsprechenden Rotor, dessen Außenradius konstant dem Wert $R_{max}$ entspricht.

Ersichtlich ist das in Fig. 5 gezeigte magnetische Luftspaltfeld wesentlich näher einem sinusförmigen Verlauf angenähert als das in Fig. 6 gezeigte. Dies resultiert daraus, dass die Positionen in Umfangsrichtung der Minimalwerte 16, 20 so gewählt sind, dass der starke Anstieg des magnetischen Streuflusses an diesen Stellen sowie der treppenförmige Verlauf berücksichtigt sind.

Fig. 7 ist eine Prinzipskizze eines zweiten Ausführungsbeispiels eines Rotors 1, welches dem ersten Ausführungsbeispiel entspricht, sofern im Folgenden nichts Abweichendes beschrieben ist. Dabei sind gleiche oder gleichwirkende Komponenten mit identischen Bezugszeichen versehen.

Bei dem Rotor 1 gemäß dem zweiten Ausführungsbeispiel umfasst die zweite Permanentmagnetanordnung 10 einen orthogonal zur Symmetrieebene 5 angeordneten Permanentmagneten 26. Auch bei einer derartigen Struktur von Permanentmagneten 6, 7, 26 kann durch die Ausbildung lokaler Minimalwerte 16, 21 bzw. lokaler Maximalwerte 18 ein dem sinusförmigen Verlauf angenähertes Luftspaltfeld erzeugt werden, wobei der Verlauf des Außenradius r hier gegenüber der Darstellung in Fig. 4 bzw. die Funktionen für den Außenradius r hier an das abweichende Streufeld anzupassen sind.

Fig. 8 ist eine Prinzipskizze eines Ausführungsbeispiels eines Fahrzeugs 27, umfassend ein Ausführungsbeispiel einer elektrischen Maschine 28. Die elektrische Maschine 28 weist einen Stator 29 und einen innerhalb des Stators 29 angeordneten Rotor 1 nach einem der zuvor beschriebenen Ausführungsbeispiele auf. Die elektrische Maschine 28 ist dazu eingerichtet, das Fahrzeug 27 anzutreiben. Das Fahrzeug kann dementsprechend ein Elektrofahrzeug (BEV) oder ein Hybridfahrzeug sein.

## Patentansprüche

1. Rotor (1) für eine elektrisch Maschine (28), umfassend ein in mehrere Sektoren (3) untergliedertes Rotorblechpaket (2), in denen jeweils eine erste Permanentmagnetanordnung (4) angeordnet ist, die zwei V-förmig und symmetrisch bezüglich einer den Sektor (3) in zwei Halbsektoren (8, 9) teilenden Symmetrieebene (5) positionierte Permanentmagnete (6, 7) umfasst, wobei ein Außenradius (r) des Rotorblechpakets (2) in einem jeweiligen Sektor (3) ein erstes Paar lokaler Minimalwerte (16), die symmetrisch bezüglich der Symmetrieebene (5) zueinander in einem jeweiligen Halbsektor (8, 9) des Sektors (3) ausgebildet sind und sich jeweils innerhalb eines Teilsektors (17) des Halbsektors (8, 9) befinden, und ein zweites Paar lokaler Minimalwerte (20), die symmetrisch bezüglich der Symmetrieebene (5) zueinander in einem jeweiligen Halbsektor (8, 9) des Sektors (3) ausgebildet sind und sich in Umfangsrichtung näher an der Symmetrieebene (5) befinden als das erste Paar lokaler Minimalwerte (16), aufweist, wobei an der Grenze von zwei benachbarten Sektoren (3) ein lokaler Maximalwert des Außenradius (r) ausgebildet ist,
   **dadurch gekennzeichnet, dass**

   der Teilsektor (17) in Umfangsrichtung durch die Position eines radial äußersten Punkts (18) der ersten Permanentmagnetanordnung (4) und durch eine Position eines in Umfangsrichtung symmetrieebenenfernen äußersten Punkts (19) der ersten Permanentmagnetanordnung (4) begrenzt ist, wobei
   in einem jeweiligen Sektor (3) eine zweite Permanentmagnetanordnung (10) angeordnet ist, wobei ein radial innerster Punkt der zweiten Permanentmagnetanordnung (10) radial weiter außen liegt als ein radial innerster Punkt der ersten Permanentmagnetanordnung (4).

2. Rotor nach Anspruch 1, wobei
   sich ein Maximalwert ($R_{max}$) des Außenradius (r) über einen jeweiligen Sektor (3) auf der Symmetrieebene (5) befindet.

3. Rotor nach Anspruch 1 oder 2, wobei
   ein jeweiliger Minimalwert (16) des ersten Paares kleiner als ein jeweiliger Minimalwert (20) des zweiten Paares ist.

4. Rotor nach einem der vorhergehenden Ansprüche, wobei
   sich in einem jeweiligen Halbsektor (8, 9) zwischen dem Minimalwert (16) des ersten Paares und dem Minimalwert (20) des zweiten Paares ein weiterer lokaler Maximalwert (21) befindet.

**5.** Rotor nach einem der vorhergehenden Ansprüche, wobei
die zweite Permanentmagnetanordnung (10) zwei weitere V-förmig und symmetrisch bezüglich der Symmetrieebene des Sektors angeordnete Permanentmagnete (11, 12) umfasst.

**6.** Rotor nach einem der Ansprüche 1 bis 4, wobei
die zweite Permanentmagnetanordnung (10) einen orthogonal zur Symmetrieebene (5) angeordneten Permanentmagneten (26) umfasst.

**7.** Rotor nach einem der vorhergehenden Ansprüche, wobei
der Verlauf des Außenradius

- in einem bezüglich eines Minimalwerts (16, 20) symmetrieebenennahen Bereich (22, 23) der Funktion

$$r = R_{max} + \delta_0 - \delta(x)$$

mit

$$\delta(x) = \frac{\alpha}{\cos\left(\frac{\pi}{\tau_p} x\right)}$$

und/oder
- in einem bezüglich eines Minimalwerts (16, 20) symmetrieebenenfernen Bereich (24, 25) der Funktion

$$r = R_{max} + \delta_0 - \delta(x)$$

mit

$$\delta(\mathrm{x}) = \beta \frac{1 - \frac{2}{\tau_p} x}{\cos\left(\frac{\pi}{\tau_p} x\right)}$$

folgt, wobei
- r den Wert des Außenradius,
- $R_{max}$ den Maximalwert des Außenradius,
- $\delta_0$ eine Konstante,
- $a, \beta$ jeweils einen positiven Proportionalitätsfaktor,
- $\tau_p$ einen Abstand in Umfangsrichtung zwischen den Symmetrieebenen (5) benachbarter Sektoren (3) und
- $x$ eine Koordinate in Umfangsrichtung mit $x = 0$ an der Position der Symmetrieebene (5) und

$x = \frac{\tau_p}{2}$ an einer Mittelposition zwischen den Symmetrieebenen (5) benachbarter Sektoren (3),
beschreiben.

**8.** Rotor nach einem der vorhergehenden Ansprüche, wobei
sich ein jeweiliges Paar lokaler Minimalwerte (16, 20) an einer Position in Umfangsrichtung befinden, an der ein magnetischer Streufluss ein lokales Maximum aufweist.

**9.** Elektrische Maschine (28) für ein Fahrzeug (27), umfassend einen Stator (29) und einen innerhalb des Stators (29) drehbar gelagerten Rotor (1) nach einem der vorhergehenden Ansprüche.

**10.** Fahrzeug (27), umfassend eine elektrische Maschine (28) nach Anspruch 9, welche dazu eingerichtet ist, das Fahrzeug (27) anzutreiben.

**Claims**

**1.** Rotor (1) for an electric machine (28), comprising a rotor lamination stack (2) subdivided into a plurality of sectors (3), in each of which a first permanent magnet arrangement (4) is arranged, which comprises two permanent magnets (6, 7) positioned in a V-shape and symmetrically with respect to a symmetry plane (5) that divides the sector (3) into two half-sectors (8, 9), wherein an outer radius (r) of the rotor lamination stack (2) in a respective sector (3) comprises a first pair of local minima (16), which are formed symmetrically with respect to the symmetry plane (5) in a respective half-sector (8, 9) of the sector (3), and are each located within a sub-sector (17) of the half-sector (8, 9), and

a second pair of local minima (20), which are formed symmetrically with respect to the symmetry plane (5) in a respective half-sector (8, 9) of the sector (3), and are located in the circumferential direction closer to the symmetry plane (5) than the first pair of local minima (16), wherein in a local maximum of the outer radius (r) is formed at the boundary between two adjacent sectors (3),
**characterized in that**
the sub-sector (17) is delimited in the circumferential direction by the position of a radially outermost point (18) of the first permanent magnet arrangement (4) and by a position of a radially outermost point (19) of the first permanent magnet arrangement (4) located furthest from the symmetry plane in the circumferential direction, wherein in a respective sector (3) a second permanent magnet arrangement (10) is arranged, wherein a radially innermost point of the second permanent magnet arrangement (10) lies radially further outward than a radially innermost point of the first permanent magnet arrangement (4).

2. Rotor according to claim 1, wherein a maximum value ($R_{max}$) of the outer radius (r) in a respective sector (3) is located on the symmetry plane (5).

3. Rotor according to claim 1 or 2, wherein a respective minimum value (16) of the first pair is smaller than a respective minimum value (20) of the second pair.

4. Rotor according to any one of the preceding claims, wherein in a respective half-sector (8, 9) between the minimum value (16) of the first pair and the minimum value (20) of the second pair, a further local maximum value (21) is located.

5. Rotor according to any one of the preceding claims, wherein the second permanent magnet arrangement (10) comprises two further permanent magnets (11, 12) arranged in a V-shape and symmetrically with respect to the symmetry plane of the sector.

6. Rotor according to any one of claims 1 to 4, wherein the second permanent magnet arrangement (10) comprises a permanent magnet (26) arranged orthogonally to the symmetry plane (5).

7. Rotor according to any one of the preceding claims, wherein the profile of the outer radius

- in a region (22, 23) near the symmetry plane with respect to a minimum value (16, 20) follows the function

$$r = R_{max} + \delta_0 - \delta(x)$$

with

$$\delta(x) = \frac{\alpha}{\cos\left(\frac{\pi}{\tau_p} x\right)}$$

and/or
- in a region (24, 25) distant from the symmetry plane with respect to a minimum value (16, 20) follows the function

$$r = R_{max} + \delta_0 - \delta(x)$$

with

$$\delta(x) = \beta \frac{1 - \frac{2}{\tau_p} x}{\cos\left(\frac{\pi}{\tau_p} x\right)}$$

wherein
- r is the value of the outer radius,
- $R_{max}$ is the maximum value of the outer radius,
- $\delta_0$ is a constant,
- $\alpha$, $\beta$ are respective positive proportionality factors,
- $\tau_p$ is a distance in the circumferential direction between the symmetry planes (5) of adjacent sectors (3), and
- x is a coordinate in the circumferential direction with x = 0 at the position of the symmetry plane (5) and x = $\tau_p$ / 2 at a mid-position between the symmetry planes (5) of adjacent sectors (3).

8. Rotor according to any one of the preceding claims, wherein a respective pair of local minima (16, 20) is located at a position in the circumferential direction where a magnetic stray flux exhibits a local maximum.

9. Electric machine (28) for a vehicle (27), comprising a stator (29) and a rotor (1) according to any one of the preceding claims, wherein the rotor (1) ist rotatably supported within the stator (29).

10. Vehicle (27), comprising an electric machine (28) according to claim 9, which is configured to drive the vehicle (27).

**Revendications**

1. Rotor (1) pour une machine électrique (28), comprenant un paquet de tôles de rotor (2) subdivisé en plusieurs secteurs (3), dans chacun desquels est disposé un premier agencement d'aimants permanents (4), lequel comprend deux aimants permanents (6, 7) disposés en forme de V et de manière symétrique par rapport à un plan de symétrie (5) divisant le secteur (3) en deux demi-secteurs (8, 9), le rayon extérieur (r) du paquet de tôles de rotor (2) présentant, dans chaque secteur (3), une première paire de valeurs minimales locales (16), formées symétriquement par rapport au plan de symétrie (5) dans un demi-secteur respectif (8, 9) du secteur (3) et se trouvant chacune à l'intérieur d'un sous-secteur (17) du demi-secteur (8, 9), et une seconde paire de valeurs minimales locales (20), également formées symétriquement par rapport au plan de symétrie (5) dans un demi-secteur respectif (8, 9) du secteur (3) et se trouvant, dans la direction circonférentielle, plus proches du plan de symétrie (5) que la première paire de valeurs minimales locales (16),

un maximum local du rayon extérieur (r) étant formé à la limite entre deux secteurs (3) adjacents,

**caractérisé en ce que**

le sous-secteur (17) est délimité dans la direction circonférentielle par la position d'un point le plus extérieur radialement (18) du premier agencement d'aimants permanents (4) et par la position d'un point le plus extérieur, éloigné du plan de symétrie dans la direction circonférentielle (19), du premier agencement d'aimants permanents (4),

un deuxième agencement d'aimants permanents (10) étant disposé dans chaque secteur (3), un point radialement le plus intérieur du deuxième agencement d'aimants permanents (10) se trouvant radialement plus à l'extérieur qu'un point radialement le plus intérieur du premier agencement d'aimants permanents (4).

2. Rotor selon la revendication 1, dans lequel une valeur maximale ($R_{max}$) du rayon extérieur (r) dans un secteur (3) respectif se trouve sur le plan de symétrie (5).

3. Rotor selon la revendication 1 ou 2, dans lequel une valeur minimale respective (16) de la première paire est inférieure à une valeur minimale respective (20) de la seconde paire.

4. Rotor selon l'une quelconque des revendications précédentes, dans lequel un autre maximum local (21) est situé dans un demi-secteur respectif (8, 9) entre la valeur minimale (16) de la première paire et la valeur minimale (20) de la seconde paire.

5. Rotor selon l'une quelconque des revendications précédentes, dans lequel le deuxième agencement d'aimants permanents (10) comprend deux autres aimants permanents (11, 12) disposés en forme de V et de manière symétrique par rapport au plan de symétrie du secteur.

6. Rotor selon l'une quelconque des revendications 1 à 4, dans lequel le deuxième agencement d'aimants permanents (10) comprend un aimant permanent (26) disposé orthogonalement au plan de symétrie (5).

7. Rotor selon l'une des revendications précédentes, dans lequel le profil du rayon extérieur

- dans une zone (22, 23) proche d'un plan de symétrie par rapport à une valeur minimale (16, 20), suit la fonction

$$r = R_{max} + \delta_0 - \delta(x)$$

avec

$$\delta(x) = \frac{\alpha}{\cos\left(\dfrac{\pi}{\tau_p} x\right)}$$

et/ou

- dans une zone (24, 25) éloignée d'un plan de symétrie par rapport à une valeur minimale (16, 20), suit la fonction

$$r = R_{max} + \delta_0 - \delta(x)$$

avec

$$\delta(\mathrm{x}) = \beta \frac{1 - \dfrac{2}{\tau_p} x}{\cos\left(\dfrac{\pi}{\tau_p} x\right)}$$

où :

- r représente la valeur du rayon extérieur,
- $R_{max}$ la valeur maximale du rayon extérieur,
- $\delta_0$ une constante,
- $\alpha$, $\beta$ des facteurs de proportionnalité positifs,
- $\tau_p$ une distance en direction circonférentielle entre les plans de symétrie (5) de secteurs adjacents (3), et
- x une coordonnée en direction circonférentielle, avec x = 0 à la position du plan de symétrie (5) et x = $\tau_p$ / 2 à une position intermédiaire entre les plans de symétrie (5) de secteurs adjacents (3).

8. Rotor selon l'une des revendications précédentes, dans lequel chaque paire de valeurs minimales locales (16, 20) se situe à une position en direction circonférentielle où un flux magnétique de fuite présente un maximum local.

9. Machine électrique (28) pour un véhicule (27), comprenant un stator (29) et un rotor (1) monté rotatif

**EP 3 758 194 B1**

à l'intérieur du stator (29) selon l'une des revendications précédentes.

10. Véhicule (27), comprenant une machine électrique (28) selon la revendication 9, ladite machine étant conçue pour entraîner le véhicule (27).

Fig. 1

Fig. 2

**Fig. 3**

**Fig. 4**

**Fig. 5**

**Fig. 6**

# Fig. 7

# Fig. 8

EP 3 758 194 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219175 A1
- US 2007145850 A1
- JP 2015053757 A